# EUROPÄISCHE PATENTSCHRIFT

(11) **EP 0 439 739 B1**
(45) Veröffentlichungstag und Bekanntmachung des Hinweises auf die Patenterteilung: **08.03.1995**
(21) Anmeldenummer: 90123497.1
(22) Anmeldetag: 07.12.1990
(51) Int. Cl.: H02K 1/30

(54) **Elektrische Synchronmaschine**
Synchronous electric machine
Machine électrique synchrone

(30) Priorität: 30.01.1990 CH 292/90
(43) Veröffentlichungstag der Anmeldung: 07.08.1991
(73) Patentinhaber: ASEA BROWN BOVERI AG, 5400 Baden (CH)
(72) Erfinder: Schwanda, Josef, CH-5242 Lupfig (CH)

(56) Entgegenhaltungen:
- EP-A- 0 339 291
- DE-B- 1 015 121
- US-A- 1 808 572

## Beschreibung

### TECHNISCHES GEBIET

Die Erfindung bezieht sich auf eine elektrische Synchronmaschine, insbesondere Wasserkraftgenerator grossen Durchmessers, mit Erregerpolen im Läufer, die von einem aus miteinander verschraubten und gegeneinander verschichteten Blechsegmenten aufgebauten Ringkörper getragen werden, der auf einem auf der Läuferwelle angeordneten als Hohlkegelstumpf ausgebildeten Nabenkörper befestigt ist, welcher Nabenkörper seinerseits an einem rotierenden Lagerteil befestigt ist.

Die Erfindung nimmt dabei Bezug auf einen Stand der Technik, wie er sich beispielsweise der Europäischen Patentanmeldung EP-A-0 339 291 vom 31.3.1989 der Anmelderin oder auch aus dem Buch von Wiedemann/Kellenberger "Konstruktion elektrischer Maschinen" Springer-Verlag Berlin-Heidelberg New York 1967, Seite 371, Abb.370, ergibt.

### TECHNOLOGISCHER HINTERGRUND UND STAND DER TECHNIK

Beim Aufbau des Läufers von Wasserkraft-Generatoren haben sich im wesentlichen die Bauart des Schichtpolrades durchgesetzt. Bei diesem ist auf einem Rotorstern der Jochkranz aus 1 bis 3 mm dicken Blechen mehrfach überlappt aufgeschichtet, ähnlich wie die Dynamobleche bei Asynchron- oder Gleichstrommaschinen. Die Schichtkranzbleche werden aus möglichst langen Segmenten, die mehrere Polteilungen umfassen, gestanzt und um je eine Polteilung verschichtet. Die Segmente werden durch Schichtbolzen zu einem vollen Kranz zusammengefügt. Gewöhnlich reicht die Pressung nicht für vollen Reibungsschluss bei Schleuderdrehzahl aus, so dass einzelne Bolzen als Scherbol zen in ausgeriebene Löcher oder alle Bolzen mit sehr kleinem Spiel eingesetzt und damit als tragend angesehen werden können.
Der Sitz des Schichtkranzes auf dem Rotorstern wird ganz verschieden gewählt. Er ist unter anderem abhängig von der Sternkonstruktion. Bei schrägen Armen von Schirmgeneratoren, die durch den Sitz des Kranzes auf Biegung beansprucht werden, wählt man einen loseren Sitz als bei sehr steifen Rotorkörpern. Der Sitz kann erzeugt werden durch Aufschrumpfen des für sich geschichteten Kranzes oder durch Verkeilen des auf den Rotorstern geschichteten Kranzes. Beide Varianten sind insofern problematisch, als bei der Auslegung die unterschiedlichen Temperatur- und Fliehkraft-Beanspruchungen bei der Dimensionierung des Sitzes berücksichtigt werden müssen. So müssen insbesondere bei einer hohlen Läuferwelle und einem geschrumpften Kranz Massnahmen getroffen werden, um die Beanspruchung der Läuferwelle durch Fliehkraft, Läufergewicht und Schrumpfkräfte der Blechkette, zu denen sich noch die Beanspruchungen durch Drehmomentübertragung und eventuell Wasserschub und Turbinengewicht addieren, übertragen zu können. Zu diesem Zweck wird im DE-Patent 28 31 123 vorgeschlagen, die Abmessungen für die Schrumpfverbindungen zwischen Blechkette und Nabenkörper so zu wählen, dass das Abheben der Blechkette bei Drehzahlen oberhalb der Nenndrehzahl auf einen Teilbereich der axialen Länge beschränkt ist, der auf der der Turbine abgewandten Seite liegt, während im Bereich benachbart zur turbinenseitigen Stirnseite des Läufers ein Abheben unterhalb der Nenndrehzahl vorgesehen ist.

Bei der vertikalachsigen Synchronmaschine nach der eingangs genannten Europäischen Patentannmeldung 0 339 291 ist der Nabenkörper als Hohlkegelstumpf ausgebildet. Dieser ist mit einem auf dem rotierenden Lagerteil befestigten Ring verschweisst. Am Aussenumfang ist der Nabenkörper mit einem Aussenring verschweisst, welcher die Funktion einer Schwungmasse und Poltrageinrichtung für die Rotorpole übernimmt.

Die US-A-1 808 572 beschreibt den Rotor eines Wasserkraftgenerators grossen Durchmessers. Die Erregerpole im Läufer sind von einem aus miteinander verschraubten und gegeneinander verschichteten Blechsegmenten aufgebauten Ringkörper getragen. Die Blechsegmente im mittleren Abschnitt des Ringkörpers sind dabei radial nach innen verlängert und mit einem zweiteiligen Nabenkörper verschraubt, der auf der Maschinenwelle befestigt ist.

### KURZE DARSTELLUNG DER ERFINDUNG

Der Erfindung liegt die Aufgabe zugrunde, eine Synchronmaschine der eingang genannten Gattung zu schaffen, welche einen einfachen und wirtschaftlichen Aufbau aufweist und allen Betriebsbeanspruchungen standhält.

Diese Aufgabe wird erfindungsgemäss durch die in den Patentansprüchen gekennzeichneten Merkmale gelöst.

Die Erfindung eignet sich sowohl für vertikalachsige Synchronmaschinen als auch Synchronmschinen mit horizontaler-Welle, insbesondere auch für horizontalachsige Rohrgeneratoren (vgl. Buch Kellenberger/Wiedemann... Abb.59 auf Seite 171).

Der Vorteil der Erfindung ist insbesondere darin zu sehen, dass sich auf diese Weise eine wohldefinierte feste Verbindung zwischen dem Nabenkörper und dem Ringkörper (Schichtkranz) ergibt. Eine temperatur- oder fliehkraftbedingte Aufweitung des Schichtkranzes ist aufgrund der Konizität des Nabenkörpers ohne weiteres möglich.

Ausführungsbeispiele der Erfindung sowie die damit erzielbaren Vorteile werden nachfolgend anhand der Zeichnung näher erläutert.

### KURZE BESCHREIBUNG DER ZEICHNUNG

In der Zeichnung sind zwei Ausführungsbeispiele der Erfindung schematisch dargestellt, und zwar zeigt:
- Fig.1: einen vereinfachen Teil-Längsschnitt durch einen vertikalachsigen Wasserkraft-Generator mit einem Nabenkörper in Gestalt eines Hohlkegelstumpfes;
- Fig.2: einen Querschnitt durch den Schichtkranz an einer Befestigungsstelle mit dem Nabenkörper;
- Fig.3: Draufsichten auf Segmentbleche, und zwar Fig.3a auf ein Segmentblech, das für den Einbau in den Schichtkranz axial ausserhalb der Nabenbefestigung vorgesehen ist, während Fig.3b ein Segementblech zeigt, das für den Einbau im zentralen Bereich des Schichtkranzes bestimmt ist;
- Fig.4: ein Ausführungsbeispiel der Erfindung mit einem horizontalachsigen Rohrgenerator;

### WEGE ZUR AUSFÜHRUNG DER ERFINDUNG

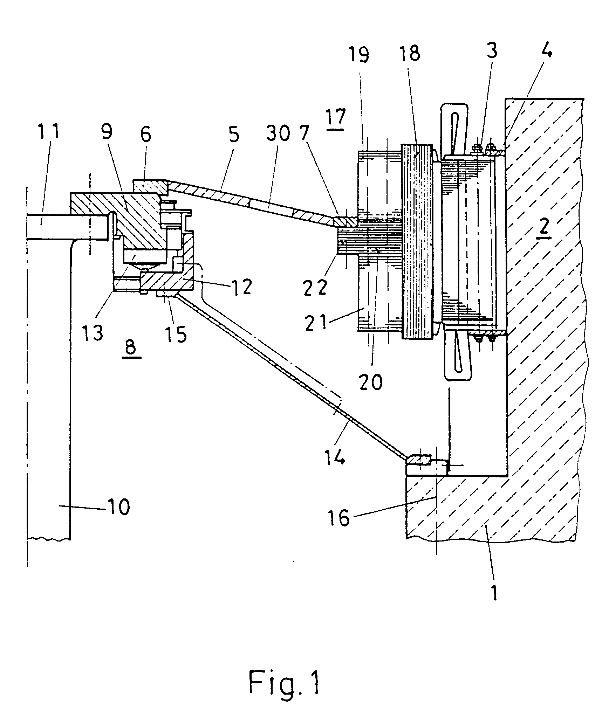

Der Wasserkraftgenerator gemäss Fig.1 ist in einer Fundamentgrube 1 mit kreiszylindrischer Wand 2 angeordnet. Sein Stator 3 ist über Abstützelemente 4 an der Wand 2 abgestützt. Der Läufer besteht aus einem Nabenkörper 5 in Gestalt eines Hohlkegelstumpfes. Er ist aus einer Vielzahl entsprechend vorgebogener Sektoren aus Stahlblech zusammengeschweisst. Seine zentrale Bohrung ist durch einen Innenring 6 verstärkt. Am äusseren Umfang ist ein Aussenring 7 angeschweisst.Beide Ringe 6, 7 sind orthogonal zur Kegelachse ausgerichtet. Das generell mit der Bezugsziffer 8 bezeichnete kombinierte Trag- und Führungslager weist einen unmittelbar am Innenring 6 befestigten Lagerteil 9 auf, welcher koaxial zu Welle 10 liegt und am Wellenflasch 11 angeschraubt ist. Der stationäre Lagerteil 12 ist unmittelbar auf einer auf dem Fundament 1 abgestützten Lagertragkonstruktion befestigt. Die Trag- und Führungssegmente des stationären Lagerteils 12 ruhen auf Tragstempeln 13. Im Beispielsfall weisen die Segemente L-förmigen Querschnitt auf.

Vorzugsweise findet ein selbstpumpendes hydrodynamisches Gleitlager Verwendung, wie es beispielsweise in der CH-PS 651 362 oder der US-PS 4,573,810 in allen Einzelheiten beschrieben ist.
Die Lagertragkonstruktion umfasst einen hohlen Kegelstumpf 14 mit einem Kegelmantelwinkel zwischen 30° und 60°. Dieser ist aus entsprechend vorgebogenen Stahlblechen, die auf der Baustelle zusammengeschweisst oder - geschraubt werden, zusammengesetzt. Am oberen Ende ist ein Ring 15 an- bzw. eingeschweisst. Am unteren Ende ist der Hohlkegelstumpf 14 mittels Fundamentankern 16 auf dem Fundament 1 befestigt.

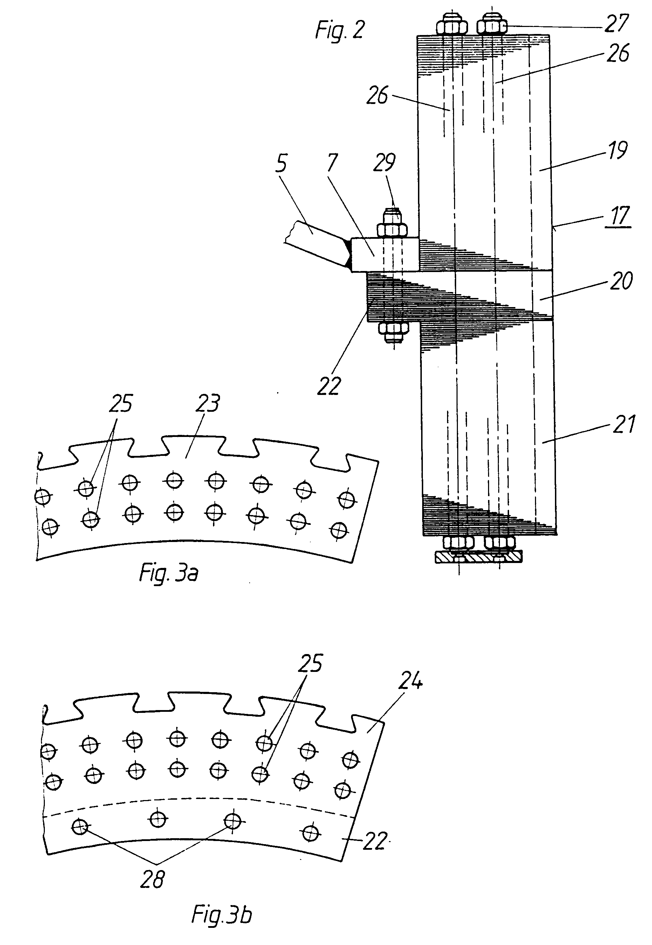

Erfindungsgemäss besteht der Ringkörper 17 des Läufers aus einer Vielzahl von 1 bis 3 mm dicken Dynamoblechen, die jeweils um eine Polteilung versetzt übereinandergeschichtet sind. Die zugehörigen Polkörper samt Polspulen 18 sind am Aussenumfang des Ringkörpers 17 in bekannter Weise befestigt. In der Detailzeichnung gemäss Fig.2 ist der Aufbau des Ringkörpers 17 verdeutlicht. Er besteht aus drei Teilblechstapeln 19, 20 und 21, wobei der mittlere Teilblechstapel 20 eine grössere radiale Breite aufweist als die beiden äusseren Teilblechstapel 19 und 21. Auf diese Weise entsteht ein Ringkörper mit einem etwa in seiner axialen Ringmitte nach innen vorkragenden Vorsprung 22. Die für den Aufbau benötigten Blechsegmenttypen 23 und 24 sind in den Figuren 3a und 3b veranschaulicht. Erste Bohrungen 25 in beiden Blechsegmenttypen 23, 24 dienen in Kombination mit durchgehenden Schraubenbolzen 26 und Muttern 27 dem Zusammenhalt des Ringkörpers 17. Zweite Bohrungen 28 im nach innen vorkragenden Abschnitt 22 der Blechsegmente 24 dienen zur Befestigung des Ringkörpers 17 am Aussenring 7 des Nabenkörpers 5. Diese erfolgt mittels Pressbolzen oder Passbolzen 29. Gewöhnlich reicht die Pressung nicht für vollen Reibungsschluss bei Schleuderdrehzahl aus, so dass einzelne, vorzugsweise alle Passbolzen 29 in Form von Scherbolzen in ausgeriebene Löcher im Innenring 7 und im Vorsprung 22 eingesetzt und verspannt werden müssen.

Um allen Betriebsbeanspruchungen des Läufers gerecht zu werden, sollte die axiale Höhe des Teilblechstapels 20 und damit auch diejenige des Vorsprungs 22 in Relation zur axialen Höhe des Ringkörpers 17 stehen. Vorzugsweise beträgt die axiale Höhe des Vorsprungs 22 10% bis 20 % der gesamten axialen Höhe des Ringkörpers 17 .Seine radiale Breite beträgt typisch 25 % bis 40 % der radialen Breite des Ringkörpers 17.

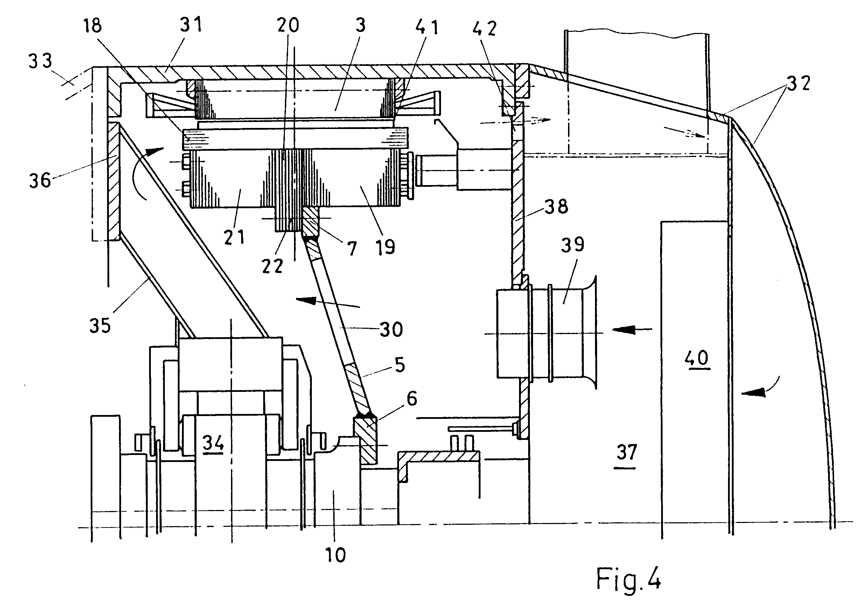

Die Erfindung eignet sich gleichermassen für Wasserkraftgeneratoren der vertikalen und horizontalen Bauart, insbesondere für horizontal oder schräg gelagerte Rohrgeneratoren, in der Literatur oft mit "Rohrturbinen" bezeichnet (a.a.O.,Seite 170). Dies ist in Fig.4 schematisch für den Generatorteil einer Rohrturbine mit umströmtem Generator veranschaulicht.

Gemäss Fig.4 ist der gesamte Generatorteil der Rohrturbine in einem Gehäuse 31 mit kreisrundem Querschnitt untergebracht, an das sich zuströmseitig (in der Zeichnung rechts) eine Kalotte 32 und abströmseitig das (nur angedeutete) Turbinengehäuse 33 anschliesst. Analog zur Ausführung nach Fig.1 weist die Maschine einen hohlkegelstumpfartigen Nabenkörper 5 mit einem Innenring 6 und einem Aussenring 7 auf. Auch der Schichtkörper 17 weist denselben Aufbau auf, wie er im Detail im Zusammenhang mit den Figuren 2, 3a und 3b beschrieben wurde. Das Axial-Radial-Lager 34 ist über eine Lagertragkonstruktion 35, die (in der Zeichnung nicht sichtbare) Montageöffnungen aufweist, mit der Stirnwand 36 am Turbinengehäuses 33 abgestützt. Der Nabenkörper 5 ist am Ende der Welle 10 befestigt. Der von der Kalotte 32 umfasste Raum 37 ist vom Raum, in welchem sich der Generator befindet, durch eine Zwischenwand 38 abgetrennt, in welcher Zwischenwand ein oder mehrere Lüfter 39 montiert sind. Diese fördern Luft im geschlossenen Kreislauf aus der Kalotte 32 durch Kühler 40 in den Innenraum des Gehäuses 31. Durch die Oeffnungen 30 gelangt die Kühlluft an das abströmseitige Ende des Generators. Von dort aus strömt sie in bekannter Weise durch den Maschinenluftspalt 41 und Pollückenkanäle 18 und Durchbrüche 42 in der Zwischenwand 38 zurück zur Kalotte 32, wie es durch die Pfeile verdeutlicht ist.

Die Vorteile der Erfindung lassen sich wie folgt zusammenfassen:
- Es ist keine Schrumpfverbindung zwischen Ringkörper und Nabe (Hohlkegelstumpf) und dadurch bedingte massive Nabenkonstruktion erforderlich. Bei Rohrgeneratoren wäre eine solche unerlässlich;
- teure Keilbahnbearbeitungen und Verkeilsysteme zwischen Ringkörper und Nabe entfallen;
- durch die feste Verbindung zwischen Ringkörper und Nabe ist die Rundhaltung des Rotors im Betrieb gewährleistet;
- Oeffnungen/Durchbrüche in der Nabe, wie sie speziell bei Rohrgeneratoren für den Kühlluft-Durchtritt notwendig sind, lassen sich ohne weiteres vorsehen;
- die konische Nabe erlaubt eine Anordnung der Lagermitte möglichst nahe der (axialen) Rotormitte;
- teure geschmiedete Ring- und Schweisskonstruktionen, speziell bei Rotoren mit hohem GD², können mit der Erfindung vermieden werden;
- das Polrad kann auf der Baustelle gefertigt werden;
- Transportabmessungen und -gewichte können klein gehalten werden;
- eine teure Rotorbearbeitung entfällt.

## Patentansprüche

1. Elektrische Synchronmaschine, insbesondere Wasserkraftgenerator grossen Durchmessers, mit Erregerpolen (18) im Läufer, die von einem aus miteinander verschraubten und gegeneinander verschichteten Blechsegmenten (23,24) aufgebauten Ringkörper (17) getragen werden, der auf einem auf der Läuferwelle (10) angeordneten als Hohlkegelstumpf (5) ausgebildeten Nabenkörper (5,6,7) befestigt ist, welcher Nabenkörper seinerseits an einem rotierenden Lagerteil (9) befestigt ist, dadurch gekennzeichnet, dass der aus Blechsegmenten aufgebaute Ringkörper (17) mit radial nach innen weisenden Vorsprüngen (22) versehen ist, welche Vorsprünge einstückig mit den Blechsegmenten (24) ausgeführt sind, dass der Ringkörper (17) an diesen Vorsprüngen mit dem Hohlkegelstumpf (5) verschraubt ist, wobei die radiale Breite des Vorsprungs (22) zwischen 25 % und 40 % der radialen Breite des Ringkörpers (17) beträgt.

2. Synchronmaschine nach Anspruch 1, dadurch gekennzeichnet, dass der Ringkörper (17) aus drei Teilblechstapeln (19,20,21) aufgebaut ist, wovon der mittlere Teilblechstapel (20) die beiden äusseren Teilblechstapel (19,21) radial nach innen überragt und mit axial verlaufenden Bohrungen versehen ist zur reib- und/oder formschlüssigen Verbindung mit dem Nabenkörper.

3. Synchronmaschine nach Anspruch 1 oder 2, dadurch gekennzeichnet, dass die axiale Höhe des mittleren Teilblechstapels (20) zwischen 10 % und 20 % der gesamten axialen Höhe des Ringkörpers (17) beträgt.

4. Synchronmaschine nach einem der Ansprüche 1 bis 3, dadurch gekennzeichnet, dass der Hohlkegelstumpf (5) aus Stahlblech besteht und mit einem orthogonal zur Kegelachse verlaufenden Innen- (6) und Aussenring (7) versehen ist.

5. Synchronmaschine nach einem der Ansprüche 1 bis 4, dadurch gekennzeichnet, dass im Hohlkegelstumpf (5) Montage- und/oder Luftführungsöffnungen (30) vorgesehen sind.

## Claims

1. Electric synchronous machine, in particular a hydroelectric generator of large diameter, having excitation poles (18) in the rotor which are carried by an annular body (17), which is constructed from segmental stampings (23, 24) screwed together and stacked with respect to one another, and is fastened to a spider body (5, 6, 7) which is arranged on the rotor shaft (10) and designed as a hollow conical fustrum (5), which spider body in turn is secured on a rotating bearing part (9), characterized in that the annular body (17) constructed from segmental stampings is provided with projections (22) pointing radially inwards, which projections are embodied in one piece with the segmental stampings (24), and the annular body (17) is screwed on said projections with the hollow conical frustum (5), the radial width of the projection (22) being between 25% and 40% of the radial width of the annular body (17).

2. Synchronous machine according to Claim 1, characterized in that the annular body (17) is constructed from three component stamping stacks (19, 20, 21), of which the middle component stamping stack (20) over-reaches the two outer component stamping stacks (19, 21) radially inwards and is provided with axially extending bores for connection to the spider body in a friction-locking and/or form-locking fashion.

3. Synchronous machine according to Claim 1 or 2, characterized in that the axial height of the middle component stamping stack (20) is between 10% and 20% of the total axial height of the annular body (17).

4. Synchronous machine according to one of Claims 1 to 3, characterized in that the hollow conical frustum (5) consists of steel sheet and is provided with an inner ring (6) and outer ring (7) extending orthogonally to the conical axis.

5. Synchronous machine according to one of Claims 1 to 4, characterized in that installation and/or air guiding apertures (30) are provided in the hollow conical frustum (5).

## Revendications

1. Machine électrique synchrone, en particulier générateur hydraulique de grand diamètre, avec des poles d'excitation (18) dans le rotor, qui sont portés par un corps annulaire (17) constitué de segments de tôle (23, 24) boulonnés l'un à l'autre et empilés en décalage l'un par rapport à l'autre, qui est fixé sur un corps de moyeu (5, 6, 7) constitué par un tronc de cône creux (5) disposé sur l'arbre (10) du rotor, corps de moyeu qui est à son tour fixé sur une partie de palier rotative (9), caractérisée en ce que le corps annulaire (17) composé de segments de tôle est pourvu de saillies (22) dirigées radialement vers l'intérieur, saillies qui sont réalisées d'une seule pièce avec les segments de tôle (24), en ce que le corps annulaire (17) est boulonné au tronc de cône creux (5) à ces saillies, la largeur radiale de la saillie (22) étant comprise entre 25 % et 40 % de la largeur radiale du corps annulaire (17).

2. Machine synchrone suivant la revendication 1, caractérisée en ce que le corps annulaire (17) est composé de trois empilements de tôles partiels (19, 20, 21), dont l'empilement de tôles partiel central (20) dépasse radialement vers l'intérieur les deux empilements de tôles partiels extérieurs (19, 21) et est pourvu de trous orientés axialement pour l'assemblage à friction et/ou à calage de forme avec le corps de moyeu.

3. Machine synchrone suivant la revendication 1 ou 2, caractérisée en ce que la hauteur axiale de l'empilement de tôles partiel central (20) est comprise entre 10 % et 20 % de la hauteur axiale totale du corps annulaire (17).

4. Machine synchrone suivant l'une des revendications 1 à 3, caractérisée en ce que le tronc de cône creux (5) est constitué de tôles d'acier et est pourvu d'un anneau intérieur (6) et d'un anneau extérieur (7) orientés perpendiculairement à l'axe du cône.

5. Machine synchrone suivant l'une des revendications 1 à 4, caractérisée en ce qu'il est prévu dans le tronc de cône creux (5) des ouvertures de montage et/ou de passage d'air (30).
